# EUROPEAN PATENT SPECIFICATION

(11) **EP 3 178 568 B1**
(45) Date of publication and mention of the grant of the patent: **17.07.2019**
(21) Application number: 16002704.1
(22) Date of filing: 20.08.2013
(51) Int. Cl.: B05C 19/04, B05D 1/30, B29C 41/36, B29C 41/28, B07B 1/10, B29K 105/00, B29C 41/30, B29C 41/32

(54) **PARTICULATE DISPENSING METHOD**
PARTIKELAUSGABEVERFAHREN
PROCÉDÉ DE DISTRIBUTION PARTICULAIRE

(30) Priority: 21.08.2012 US 201261691513 P
(43) Date of publication of application: 14.06.2017
(62) Divisional of application: 13753771.8
(73) Proprietor: Avery Dennison Corporation, Pasadena, CA 91103-3596 (US)
(72) Inventor: MEHRABI, Ali R., Pasadena, CA 91103-3596 (US); MEHRABI, Reza, Pasadena CA 91103-3596 (US); CHICA, Frank, Pasadenaa, CA 91103-3596 (US)
(74) Representative: Müller-Boré & Partner Patentanwälte PartG mbB

(56) References cited:
- DE-C- 138 390

## Description

### FIELD

The present subject matter relates to a method for dispensing particulates and particularly powdered or granular materials such as salt to form a uniform layer on a moving substrate.

### BACKGROUND

Various technologies and applications are known that utilize a polymeric or resin film having one or two porous, textured, and/or microstructured faces. In many applications using such porous faced films, it is important that the film exhibit a relatively uniform thickness or other properties.

Micro-embossing, photolithography, etching, and laser drilling are among the methods previously developed to generate textured and micro-structures at or on the surface of a polymeric or resin layer. While some of these methods are advantageous due to economical and technological issues, they generally lack the ability to efficiently and/or effectively produce certain branched and/or closed loop void structures within the polymeric or resin layer. Additionally, in general, these methods may not be well suited to the production of internal networks of interconnected pores within a polymeric matrix.

In certain technologies, it is known to deposit one or more layers of dissolvable granular or particulate material. After formation of a layer of the dissolvable material, an invading flowable material is introduced into the voids or pores of the layer of particulates. After solidification of the flowable material, the dissolvable granular material is removed such as by exposure to a wash liquid or solvent(s). The resulting layer may exhibit a porous, textured, and/or microstructured face and/or interior. Although satisfactory in certain regards, improvements are needed in order to form a layer or region having uniform properties, characteristics, and/or thickness.

Accordingly, it would be beneficial to provide methods for forming polymeric films or resins having porous, textured, and/or microstructured faces and which exhibit particular tailored properties such as uniform thicknesses and other aspects.

DE 138 390 C relates to an endless template for the production of patterned linoleum by means of granulated topcoat.

### SUMMARY

The difficulties and drawbacks associated with previously known technologies are addressed by the subject-matter of the independent claim. Preferred embodiments are defined in the dependent claims.

As will be realized, the subject matter described herein is capable of other and different embodiments and its several details are capable of modifications in various respects, all without departing from the claimed subject matter. Accordingly, the drawings and description are to be regarded as illustrative and not restrictive.

### BRIEF DESCRIPTION OF THE DRAWINGS

Figure 1 is a schematic perspective view of a particulate dispensing apparatus.
Figure 2 is another schematic perspective view of a particulate dispensing apparatus.
Figure 3 is another schematic perspective view of a particulate dispensing apparatus.
Figure 4 is a top planar view of a particulate dispensing apparatus.
Figure 5 is a detailed perspective view of a particulate dispensing apparatus in use and containing particulate material to be dispensed.
Figure 6 is another detailed perspective view of the apparatus in use and containing particulate material to be dispensed.
Figure 7 is a detailed perspective view of the apparatus in use, illustrating a layer of particulate material deposited on a moving substrate by the apparatus.
Figure 8 is another detailed perspective view of the apparatus in use, illustrating a layer of particulate material deposited on a moving substrate by the apparatus.
Figure 9 is a process schematic illustrating a method utilizing the apparatus in accordance with the present subject matter.
Figure 10 is another process schematic illustrating a system in accordance with the present subject matter.
Figure 11 is another process schematic illustrating another aspect of the apparatus and method in accordance with the present subject matter.
Figure 12 is another schematic perspective view of a particulate dispensing apparatus in accordance with the present subject matter.
Figure 13 is another schematic perspective view of a particulate dispensing apparatus in accordance with the present subject matter.
Figure 14 is another schematic perspective view of a particulate dispensing apparatus in accordance with the present subject matter.
Figure 15 is another schematic perspective view of a particulate dispensing apparatus in accordance with the present subject matter.
Figure 16 is a graph of measured densities of particulate layers produced using the dispensing apparatuses.

### DETAILED DESCRIPTION OF THE EMBODIMENTS

In accordance with the present invention, a particulate dispensing method is provided. The system generally comprises one or more containers for receiving, retaining and/or dispensing particulate material(s). The system also comprises one or more reciprocating or vibrating blades which are at least partially disposed in the container(s). The system also comprises a moving mesh web which is directed under the container. The system also comprises a component or system for applying or transferring a vibratory motion to the container, the blades, and/or the mesh web.

Upon deposition or placement of particulate material(s) in the container and in contact with the blade(s), passing the mesh web under the container, and vibrating at least one of the container, blade(s), and mesh web; particulate material in the container is dispensed in a relatively uniform manner by gravity, to the moving mesh web under the container. The mesh web is sized, i.e. openings defined in the mesh are sized, such that particles from one side or face of the mesh web pass through the mesh openings, to the other side or face of the mesh. In many applications, it is contemplated that the particulates are then deposited on a substrate (or moving support) positioned below the mesh web. And in certain applications, the substrate (or moving support) can be a moving belt having a linear speed corresponding to that of the mesh web. These aspects and other details and features of the present subject matter are all described in greater detail herein.

A wide array of one or more granular solid materials may be used in conjunction with the particulate dispensing system. Likewise, one or more shapes and/or sizes of particles may optionally be used to achieve a desired particle size distribution. The selected size(s), shape(s) and/or material(s) depend on the intermediate composite material and/or final structured/porous material which is ultimately desired. Examples of granular solids than may be dispensed include but are not limited to, e.g., CaCO3, NaCl, KCl, Na2SO4, Na2S2O5, etc. In general, the granular solid can be a mixture of solid particles of different chemical nature, size and shape. The granular solid can be a soluble material in a given solvent or solvent mixture. Optionally, the granular solid may contain materials that are not soluble in a particular solvent. For example, a granular solid can be a mixture of sodium chloride (i.e., water soluble) and titanium dioxide (i.e., water insoluble) powders. Typically, the particulates to be dispensed have an average particle diameter or span of from about 1 micron to about 200 microns, and more typically from about 5 microns to about 100 microns. However, it is contemplated that larger and/or smaller particulates can be dispensed using the present subject matter. When utilizing relatively large particulates such as large particles of salt, the salt powder is typically ground or otherwise formed into smaller particles. The resulting particulate material is then sieved to obtain a smaller range of particle size. The larger particles can be used to form products (as described in greater detail herein) having relatively large pores and the smaller particles can be used to form products (also described in greater detail herein) having smaller pore sizes.

Salt particles generally begin to contact each other when compacted. During invasion from a flowable polymeric material, the polymer fills the gaps between the salt particles. When the salt is washed away, the resulting material structure includes channels characterized as having a pore span or diameter, i.e., the largest dimension taken transverse to a longitudinal axis of the channel; and a pore throat, i.e., the smallest diameter of a pore taken transverse to the longitudinal axis. The channels are the holes or void regions where the salt particles were located before being washed away. The pore throats are caused by failure of polymer material filling all the gaps between the salt particles because the polymer is relatively viscous. When dispensing particulates using the dispensing apparatus as described herein, and then forming microstructured polymeric layer(s) as also described herein; typically, a dimensional ratio of from about 5:1 to about 7:1 exists between pore spans and pore throats in the resulting polymeric layer. Thus, if the pores are 10 microns in diameter or span, the narrowest pore throats are about 2 microns. Thus, the present subject matter enables the formation of microstructured polymeric layers having particular dimensional characteristics. This may be desirable for forming materials for particular applications such as for filtration media. Filtration media often exhibit pore throats and/or pore channels having certain dimensions.

In certain embodiments, the particulate material to be dispensed, such as salt particles, may be coated with a functional material. During formation of porous products (described in greater detail herein) the functional material may be an insoluble coating material. After the invasion by polymer when forming the porous product, the salt can be removed such as by washing, leaving the porous polymer with the functional coating material.

Particle size distribution can vary so the pore size distribution may vary. As previously noted, after grinding or other particle size reducing operation, the powder is sieved to obtain a smaller range of particle size. Generally, the smaller the size range, the more uniform the pore sizes will be in the final material. Since the polymer will not be able to invade all the gaps, with inclusion of smaller sized particles in the salt, the pore throat may become larger.

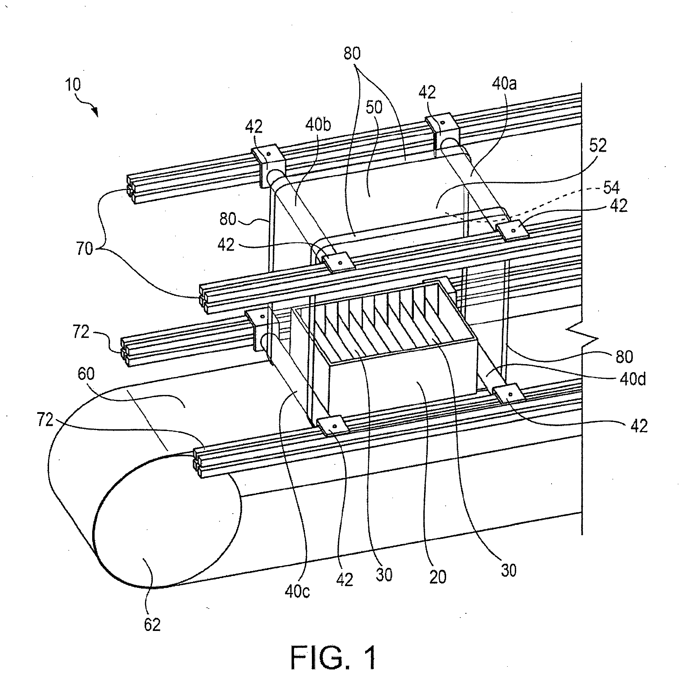

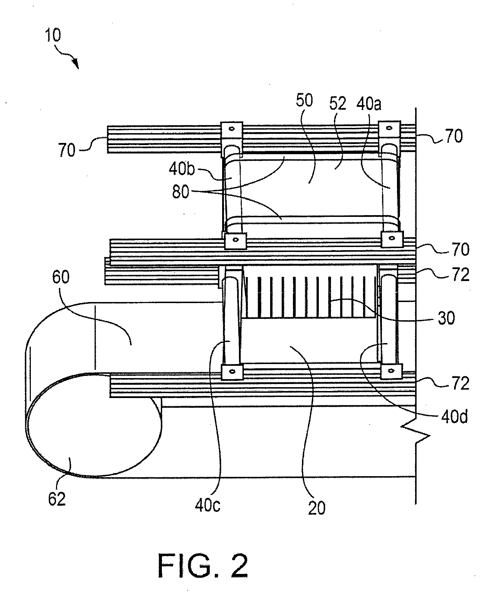

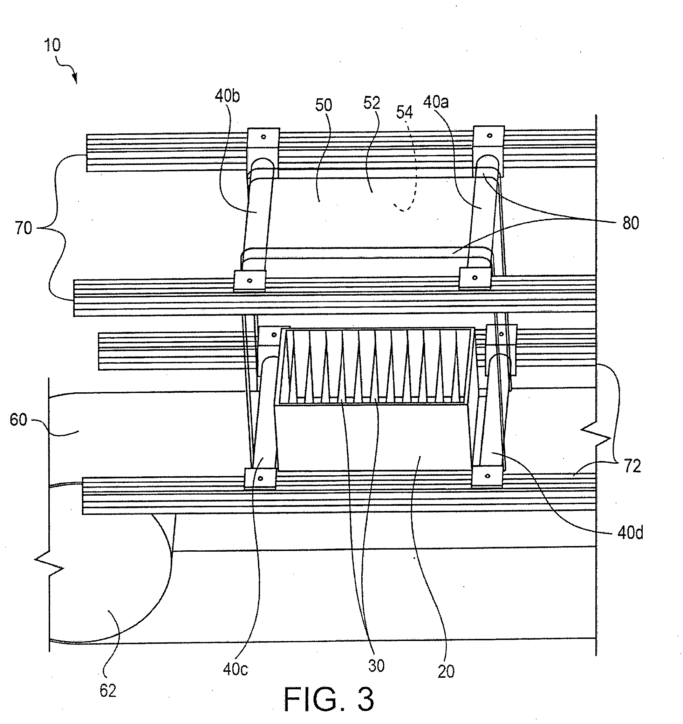

Figures 1-3 are various schematic views of a particle dispensing apparatus 10 in accordance with the present invention. The apparatus 10 comprises a container 20 for receiving and/or retaining particulate material to be dispensed. The container 20 may be provided in a variety of different forms, shapes, and sizes. An open top, rectangular or square shaped container is depicted in the referenced figures. In certain versions, the container 20 is devoid of a bottom wall or substrate. As described in greater detail herein, the container is positioned directly above a mesh web, and so the web serves as a bottom for the container. However, the present invention includes containers with bottom walls or substrates. Such bottom walls may be provided with apertures or patterned openings or arrangement of openings which are tailored to provide a pattern or amount of particulates being dispensed. The openings defined in the bottom wall if used, can be nearly any shape and/or size.

The apparatus 10 also comprises one or more reciprocating or vibrating members at least partially disposed within the container 20. In the embodiment depicted in the referenced figures, a collection of spaced apart and parallel blades 30 are illustrated. In certain embodiments, the reciprocating or vibrating members are in the form of blades 30. These blade members extend into the container 20. Upon depositing particulate material in the container 20 for subsequent deposition, the blades 30 contact the material. In certain embodiments of the dispensing apparatus, the blades can be configured to divide or segregate the container into distinct sections or compartments. One or more, or each section can then receive a different type of particulate material. The particulate materials may include particles having different sizes, different compositions, or different properties. It is also contemplated that certain sections may receive combinations of different particulate materials. Furthermore, each section or compartment may be further divided or segregated into smaller compartments or subcompartments. These strategies significantly increase the range of uses and flexibility in operation of the dispensing apparatus 10 and particularly for producing porous membranes or articles having properties and/or compositions that vary across the thickness of the membrane and/or in a crosswise direction, i.e., in a direction transverse to the direction of the moving mesh web described in greater detail herein.

In certain versions, the apparatus 10 also comprises a plurality of rollers 40 which are designated in the referenced figures as including rollers 40a, 40b, 40c, and 40d. Each of the rollers is rotatably mounted and supported by a frame assembly. For example, upper frame members 70 support rollers 40a and 40b. And, lower frame members 72 support rollers 40c and 40d.

The rollers, collectively referred to as rollers 40, support and guide a continuous mesh web 50. The mesh web 50 defines an outer face 52 and an oppositely directed inner face 54. As shown in the referenced figures, the mesh web 50 and associated rollers 40 are positioned so that the mesh web 50 passes under the container 20. Typically, the container 20 is positioned within an interior region defined by the rollers 40 and mesh web 50 passing therebetween, and between at least two of the rollers such as rollers 40c and 40d. However, the present subject matter includes a wide array of other configurations and arrangements.

The mesh web 50 can be provided in a wide range of configurations. Typically, the web 50 is passed closely underneath the container 20. The mesh web 50 is typically formed at least in part, from a thin flexible screen material which defines a relatively large number of apertures along its face. The apertures extend through the thickness of the mesh web 50. The size or span of the apertures in the mesh web are typically selected based upon the particle size or range of sizes of the particulate material to be dispensed. In certain applications, the apertures of the mesh web are sized such that a minimum proportion of particulates to be dispensed, can pass through the mesh web. For example, for certain applications, the mesh web is selected such that at least 90% of the particulates to be dispensed can pass through the mesh web. In other applications for example, the mesh web is selected such that at least 95% of the particulates to be dispensed can pass through the mesh web. In still other applications for example, the mesh web is selected such that at least 99% of the particulates to be dispensed can pass through the mesh web. In yet another example, if the particulate material to be dispensed has a particle size distribution of from 10 to 100 microns, it may be useful to use a mesh having openings that are 80 microns in order to deposit particles less than 80 microns and retain or not deposit particles having a size greater than 80 microns. In still another example, if the mesh web 50 includes regions of mesh that have different sized openings, such as in a web direction or in a cross direction, the maximum particle size of dispensed particulates can be controlled by directing only the desired regions of the mesh web 50 under the container 20. Although not wishing to be limited to any particular mesh sizes, a representative mesh opening of from about 200 microns to 250 microns is suitable for many applications. A wide array of mesh screen materials can be used for the mesh web 50. For example, wire screen materials can be used. In addition, fabric materials including woven and/or nonwoven materials can be used. It is also contemplated that perforated sheets or films could be used for the mesh web. A wide array of woven wire cloth products are commercially available from McMaster-Carr of Elmhurst, Illinois. Specific non-limiting examples of woven wire cloth include particle-sifting types 304, 316 and 430 stainless steel woven wire cloth, welded wire cloth, crimped space cloth, and molded plastic mesh including polyester, polypropylene, or other suitable polymeric materials. Custom made webs or meshes are commercially available from sources such as Interplex Industries, Inc. of College Point, New York.

In certain embodiments, the mesh web 50 includes one or more, and particularly two, raised regions 80 of a flexible material such as an elastomer or rubber material along one or both faces of the web 50. Typically, the raised regions are disposed on an outer face of the mesh web 50. When using multiple raised regions of flexible material, the regions can be spaced apart and oriented parallel to one another. The height of the raised region 80 as measured from the outer face 52 of the mesh web 50 corresponds to the desired thickness of a layer of particulate material to be deposited on a substrate (or moving support), and is described in greater detail herein. Representative thickness ranges for the raised region(s) 80 include from about 0.01 inches (0,25mm) to about 0.50 inches (12,7mm), and more particularly from about 0.0625 inches (1,59mm) to about 0.125 inches (3,18mm). However, it will be appreciated that the present subject matter can utilize raised region(s) having heights lesser than or greater than these dimensions. In certain versions of the dispensing apparatus, the raised region(s) may not be necessary or desired. An appropriately tensioned mesh, with control provisions to adjust the distance between the container and the mesh web can be sufficient to control the thickness of the layer of deposited material.

The apparatus 10 is typically positioned above a region of a support substrate (or moving support) 60 upon which the particulate material is to be deposited. As explained in greater detail herein, the substrate (or moving support) 60 is typically moving or otherwise linearly displaced and passed under the apparatus 10. One or more primary rollers 62 can be used to feed, power, and/or collect the substrate (or moving support) 60 prior to and/or after receiving the particulate material.

In certain versions, the apparatus 10 also comprises vibratory provisions which upon operation, produce a reciprocating or vibratory movement which can be transferred to one or more components of the apparatus 10. This strategy produces active vibration as described in greater detail herein in conjunction with passive vibration. Typically, the vibratory provisions are in the form of commercially available shakers, industrial vibrators, and the like which are known in the material handling field. An example of a commercially available industrial vibrator are those offered by McMaster-Carr. It is also contemplated that vibration of one or more components of the dispensing apparatus could be induced by acoustic means such as by using speakers which emit sound in the audible or ultrasound frequency range. The vibratory provisions are placed in vibratory communication with at least one blade member such that vibratory movement produced by the vibratory provisions is transmitted to the at least one blade member which results in the at least one blade member undergoing vibratory movement. In certain applications, the vibratory provisions are also placed in vibratory communication with the mesh web. This can be accomplished by placing the vibratory provisions in vibratory communication with one or more of the plurality of rollers 40 such as their corresponding supports 42. Vibratory motion imparted to the roller(s) will then be transmitted to the mesh web 50. Vibratory communication is typically established by mechanical engagement or linkage between the vibratory provision(s) and the component to be vibrated, e.g. the blades 30 and/or the rollers 40. When utilizing active vibration of one or more components of the apparatus 10 such as the noted shakers or industrial vibrators, the frequency of the vibration is typically from about 100 cycles/minute to about 30,000 cycles/minute, and more typically from about 500 cycles/minute to about 10,000 cycles/minute. Within the industry, when expressing vibration frequencies, artisans may use the term "vibrations per minute" rather than cycles per minute. The particular vibration frequency or range of frequencies used depends upon a variety of factors such as the throughput or amount of particulate material to be dispensed, the properties of the particulate material, and other factors. The apparatus 10 may also be configured to promote particulate dispensing without active vibration. Passive vibration primarily results from vibration of the blades caused by contact or rubbing of the blade edges against the moving mesh web. In certain applications, the dispensing apparatus can be configured to promote particulate dispensing by use of passive vibration. In such versions of the present subject matter, active vibration components such as shakers and industrial vibrators may not be needed. The frequency and amplitude of passive vibration are dependent upon a host of factors including the speed of the mesh web, the size and weight of the blade(s), friction factors between contacting surfaces, and characteristics of the particulate material for example. Typically, the frequency of passive vibration can be within the previously noted frequency ranges for active vibration. The vibration, passive or active, can be linear or can be two or three dimensional.

In certain embodiments, it may be preferred to utilize one or more pneumatic piston vibrators to provide a linear vibration for the particulate dispensing apparatus. A preferred non-limiting example of a pneumatic piston vibrator are the FPLF series linear pneumatic piston vibrators commercially available from Houston Vibrator, Ltd. Of Houston, Texas. The FPLF series includes various models with output forces ranging from 4.8 pounds (21,35N) to 980 pounds (4359,26N) and frequencies of from 1,800 to 11,500 (30Hz to 11500/60 Hz) vibrations per minute (VPM).

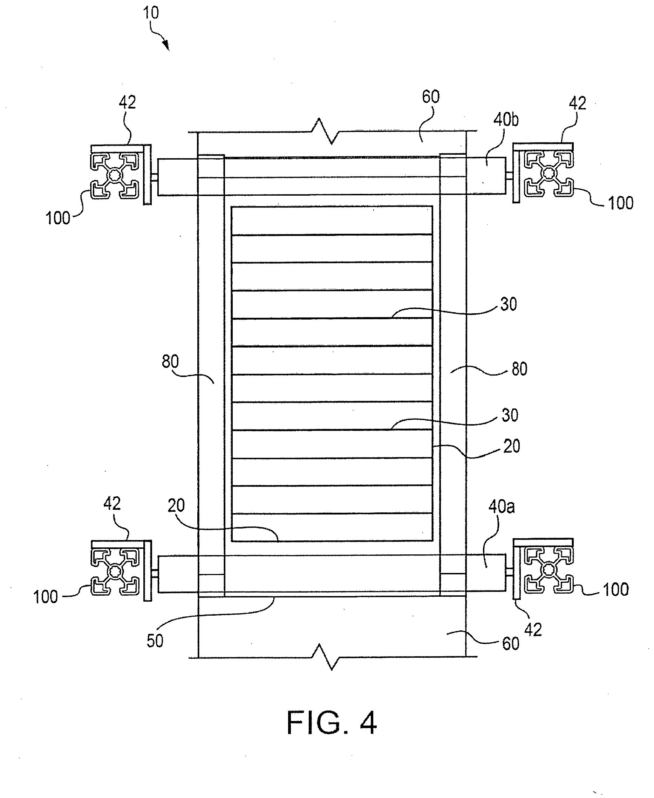

Figure 4 is a top view of the particulate dispensing apparatus 10. As shown, the container 20 is centrally disposed between the rollers, and the plurality of blades 30 are arranged within the container 20 uniformly spaced apart from one another and oriented parallel to one another. Figure 4 schematically illustrates a configuration in which each end of the rollers 40a and 40b are placed in vibratory communication with vibratory provisions 100. The vibratory provisions 100 produce active vibration and can be as previously described, e.g., in the form of shakers and industrial vibrators.

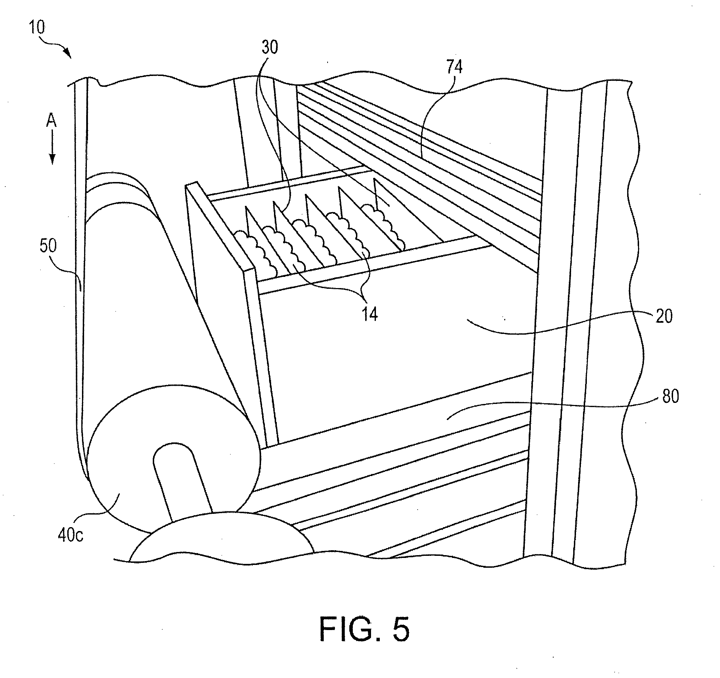

Figure 5 is a detailed perspective view of the apparatus 10 in use and containing particulate material 14 to be dispensed. The container 20 is positioned above the mesh web 50 and generally between two ridges 80 on the web 50. One or more support members 74 may be included in the apparatus 10 and optionally affixed to the container 20 to provide additional support and/or rigidity to the apparatus 10 and/or the container 20. Particulate material 14 retained within the container 20 is disposed between and generally alongside the collection of blades 30. During operation of the apparatus 10, vibratory motion is transferred to the blades 30 thereby promoting gravity dispensing of the material 14 from the container 20 to mesh web 50 travelling in the direction of arrow A under the container 20.

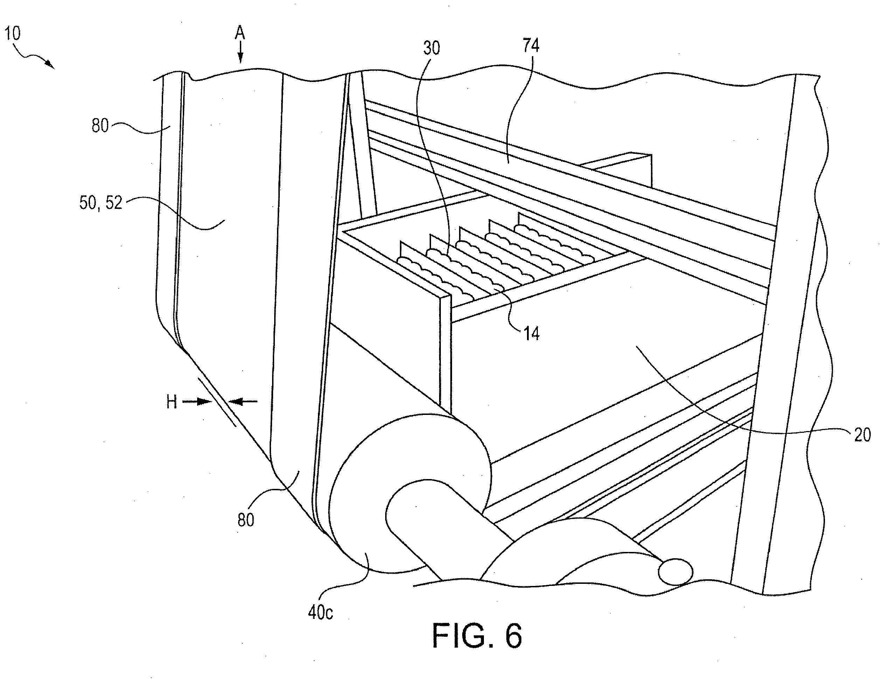

Figure 6 is another detailed perspective view of the apparatus 10 in use. The two raised ridges 80 of the mesh web 50 are shown which extend outward from an outer face 52 of the mesh web 50. The ridges 80 typically project outward from the outer face 52 of the mesh web 50, a distance which corresponds to the desired height of the layer of deposited particulate material 14. Generally and as previously noted, the height of the ridges 80 shown in Figure 6 as H, is from about 0.01 inches (0,25mm) to about 0.50 inches (12,7mm), and typically from about 0.0625 inches (1,59mm) to about 0.125 inches (3,18mm). Typically, the thickness of the raised regions or ridges 80 corresponds to the thickness of the salt bed or particulate layer that is deposited. Typically, an excess amount of salt is deposited, when fully compacted, as compared to the final thickness of the layered arrangement. In theory, the excess is relatively small. For example, if a 25 micron film is used to make a layered arrangement, the thickness of the polymeric material layer may expand to about 100 microns when the polymeric material infuses in the salt layers. In this case, each layer of salt that is deposited should have a thickness greater than 50 (100 divided by 2) microns after the salt has been fully compacted, i.e., passed through a maximum pressure zone described in greater detail herein. The salt that is deposited typically has a density that is less than the density of salt after compaction. The density of the deposited salt can be controlled to a certain extent by tilting the mesh downward in the direction of the moving web. The greater the tilt, the higher the density. That aspect and related process and apparatus are described in greater detail herein. The density of the salt exiting the dispensing apparatus may be from about 0.5 to about 1.0 g/cm³; whereas after the full process the density is typically significantly higher, e.g., 1.4 or 1.5 g/cm³.

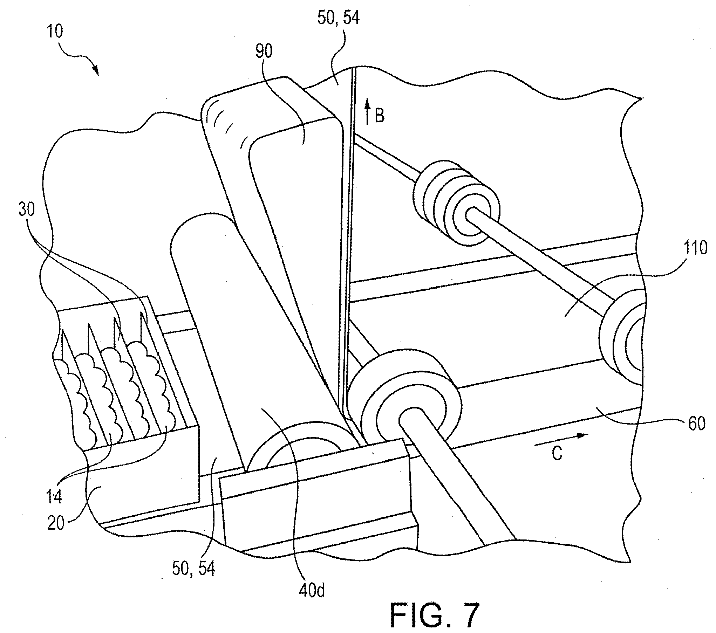

Figure 7 is another detailed perspective view of the apparatus 10 in operation. Figure 7 depicts an optional scraper member 90 positioned downstream from the container 20. In certain applications, during dispensing of particulate material 14, a minor proportion of material does not pass through the mesh web 50 and instead, is carried along an inner face 54 of the web 50. The scraper member 90 is positioned in close proximity or in certain applications in intimate contact with the inner face 54 of the web 50 to remove and/or dislodge any particulate material 14 from the web 50. Although the scraper 90 can be located in numerous positions throughout the apparatus 10, in certain versions the scraper 90 can be located immediately behind a roller such as roller 40d and alongside a vertical portion of the web 50. This location is generally the location at which the web 50, moving in direction B, diverges or separates from, the moving substrate (or moving support) 60, moving in direction C. The moving substrate (or moving support) 60 carriers a layer 110 of dispensed particulate material 14 deposited from the apparatus 10.

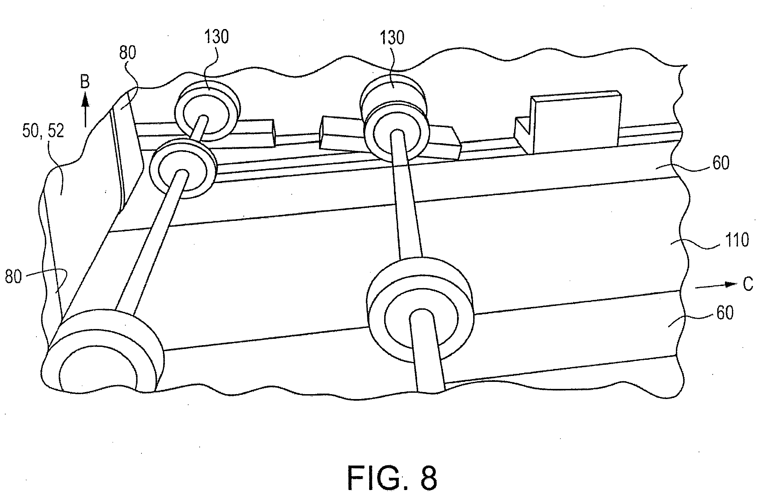

Figure 8 is another detailed view illustrating a region downstream of the apparatus 10, showing the layer 110 of dispensed particulate material on the moving substrate (or moving support) 60. One or more assemblies of supplemental rollers 130 can be provided downstream of the apparatus 10 to appropriately tension and/or guide the substrate (or moving support) 60 moving in direction C and carrying the layer 110 of dispensed particulate material 14.

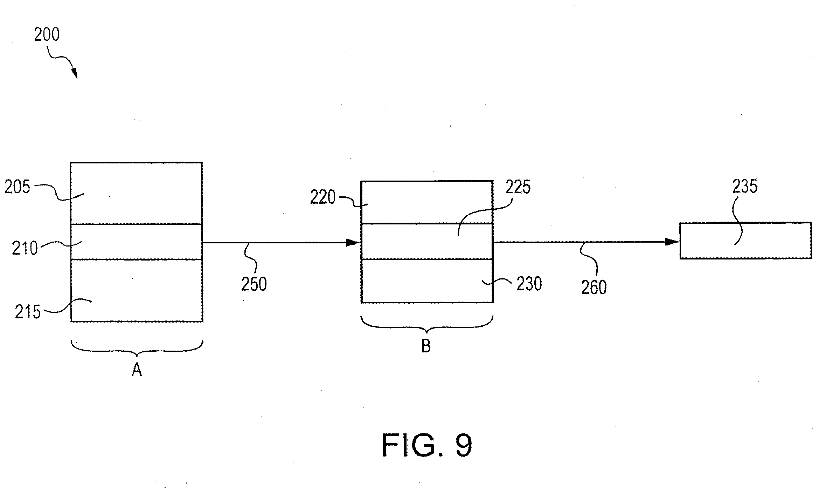

Figure 9 is a process schematic illustrating a method 200 for forming a porous material using the present subject matter and/or aspects thereof. The process 200 generally comprises one or more operations to form a layered material composite designated as composite A in Figure 9. Composite A includes an upper layer 205 of a first particulate material, a lower layer 215 of a second particulate material, and a medial layer 210 of a polymeric material. The first particulate material and the second particulate material can be the same, or can be different from one another. Typically, the first and the second particulate materials are soluble or dissoluble in a washing liquid described in greater detail herein. The layers 205 and 215 of the particulate materials are deposited alongside the medial layer 210 of polymeric material by techniques and equipment described herein. Generally, the layers 205 and 215 are deposited by use of the previously described dispensing apparatus 10 or variations thereof.

After formation of the material composite A, heat and pressure are applied at 250 to thereby form a compressed material composite B. Composite B generally includes an upper layer 220 of particulate material from layer 205, a lower layer 230 of particulate material from layer 215, and a medial layer 225. As a result of application of heat and pressure at 250, the polymeric material in medial layer 225 becomes flowable and flows between portions of voids between particles in the layers 220 and 230. Moreover, as a result of application of compressive force at 250, particulate material in the upper and lower layers and generally along the interface with the medial layer, are displaced or otherwise urged into the medical layer. Thus, although composite B shown in Figure 9 is depicted with clear and defined lines of separation between layers 220, 225, and 230, it will be appreciated that in many composites, a well defined interface between layers will not exist.

The process 200 also comprises one or more washing operations at 260. The washing operations involve applying one or more liquids such as solvents, which dissolve or solubilize the particulate material, such as in layers 220 and 230 in Composite B. The washing operations 260 also remove all or a portion of particulate material located in the medial layer 225 of composite B. Removal of that particulate material results in a microstructured or porous film or article 235 as shown in Figure 9.

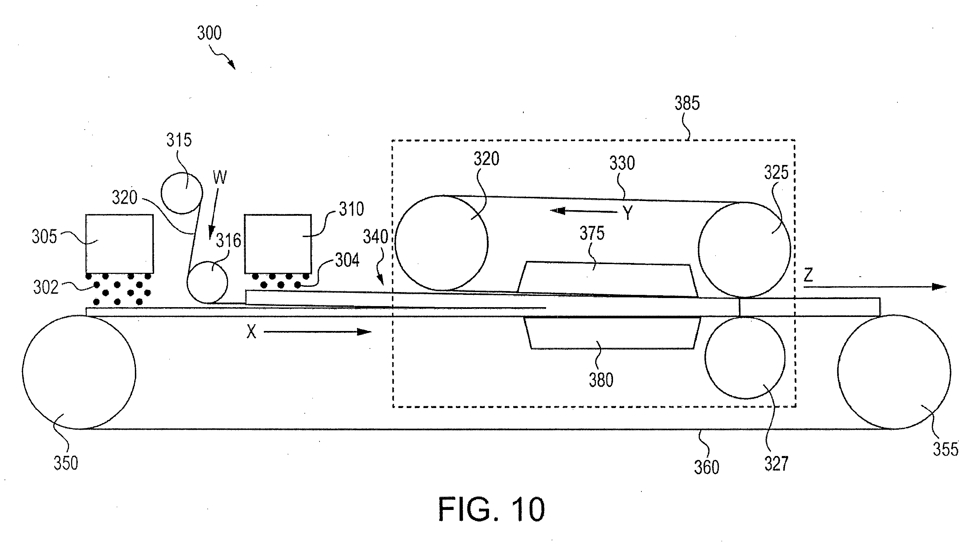

Figure 10 is a schematic illustration of a system 300 in accordance with the present subject matter. System 300 can be used to form the porous article 235 depicted in Figure 9. The system 300 generally comprises a pair of particulate dispensing apparatuses shown as 305 and 310 in Figure 10. The dispensing apparatus 305 deposits a layer of particulate material 302 onto a moving support 360. The moving support 360 can be in a variety of forms and configurations. Generally, the moving support 360 is a continuous support or conveyor extending between and powered by one or more rollers such as rollers 350 and 355 depicted in Figure 10. The dispensing apparatus 310 deposits a layer of particulate material 304 onto a polymeric film also described in greater detail herein. The particulate materials 302 and 304 can be the same or different from one another. One or both of the particulate dispensing apparatuses 305 and/or 310 can be in the form of the previously described apparatus 10 depicted in Figures 1-8.

The two layers of particulate materials 302 and 304 are formed alongside and separated by a layer of a polymeric material, such as a resin film 320. A wound roll of polymeric film 320 is shown as 315 and appropriately dispensed in the direction of arrow W into the system 300 at roller 316 located between the dispensing apparatuses 305 and 310. System 300 includes provisions for dispensing the polymeric film 320 onto the support 360. Thus, a layered arrangement of materials is formed similar to material composite A previously described in association with Figure 9. The layered arrangement of materials are transported to a convergence zone 340 shown in Figure 10, and includes an upper layer of particulate material 304, a layer of the polymeric film 320 under the upper layer, a lower layer of particulate material 302 under the film 320, and the moving support 360 supporting and contacting the lower layer of material 302.

Upon entering the convergence zone 340, the previously noted layered arrangement of materials is subjected to application of heat and pressure. The heat and pressure are typically applied concurrently and by use of a double belt press generally shown as 385 in Figure 10.

The double belt press 385 generally includes a pair of rollers 320 and 325 and a continuous substrate 330 which is displaced in the direction of arrow Y, between the rollers 320, 325. The speed of the moving substrate 330 is adjusted to match or correspond to the speed of the support (or moving support) 360 moving in the direction of arrow X. Thus, as will be understood, the previously noted layered arrangement of materials is disposed between the moving substrates (or moving supports) 330 and 360. The layered arrangement disposed between substrates (or moving supports) 330 and 360 is subjected to application of heat and pressure at stations 375 and 380. The extent of heat and pressure applied is generally an amount sufficient to at least partially melt the polymeric film 320 and cause the polymeric material to flow between particles 302, 304 in the adjacent layers. In certain applications, it may also be desired to provide a secondary sizing roller 327 that is spaced from the roller 325 a specified distance to thereby produce a layered material composite having a desired thickness. A double belt press suitable for use as component 385 depicted in Figure 10 is commercially available from Hymmen of Germany under the designation ISOPRESS Double Belt Press.

Upon exiting the double belt press 385, the layered material composite corresponds to the composite B shown in Figure 9. The resulting composite is directed downstream in direction Z to one or more operations such as cooling and/or washing operations.

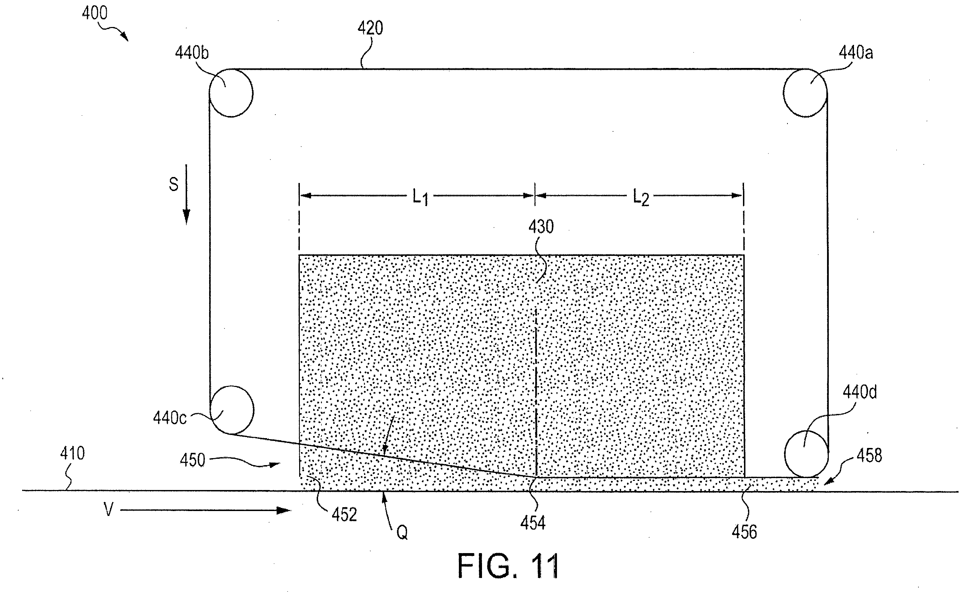

Figure 11 is another process schematic illustrating another embodiment of the particulate dispensing apparatus. The apparatus 400 illustrated in Figure 11 comprises a particulate container 430 having at least one blade (not shown) extending into the interior of the container 430. As will be understood, particulate material to be dispensed is deposited in the container 430, between and in contact with the blades as generally described in conjunction with apparatus 10. The apparatus 400 also comprises a moving mesh web 420 extending about rollers 440a, 440b, 440c, and 440d. The mesh web 420 may include one or more raised regions or ridges of flexible material (not shown) on one or both faces of the mesh web 420. The mesh web 420 is displaced in the direction of arrow S. A moving support 410 is provided under the mesh web 420 as the web 420 passes under the container 430. The moving support 410 is displaced in the direction of arrow V and at a speed equal or substantially so, to the speed of the mesh web 420.

As previously noted, the density of particulates deposited using the present subject matter apparatuses can be at least partially controlled by orienting the mesh web at an angle and particularly at a downward angle as the mesh web passes under the container. Generally, the greater the angle of downward orientation of the mesh web, the greater the resulting density of deposited particulates. The apparatus 400 depicted in Figure 11 utilizes a particular orientation for the moving web 420 in which the web 420, as it passes under the container 430 or at least under particulate material in the container to be deposited, extends downward at an angle across a first length portion of the container 430; and as the mesh web 420 passes under a remaining second length position of the container 430, the mesh web extends generally horizontal and parallel with the moving support 410 disposed under the moving web 420. The angle of downward orientation of the mesh web 420 is shown in Figure 11 as angle Q, and may range from about 1° to about 30° or more, and particularly from about 2° to about 10°. Thus, that portion of the mesh web 420 is nonparallel to the moving support 410. It will be understood that the present subject matter is not limited to any of these angles and includes downward and upward orientations of angles less than or greater than these angles. The moving web 420 may extend along a downward orientation across the entire length dimension of the container. Alternatively and as shown in Figure 11, the mesh web 420 may extend in a downward orientation for only a portion of the length of the container 420, such as length portion L₁. The mesh web 420 then continues to pass under the container 430 at a generally horizontal orientation and parallel with the moving support 410, across the remaining length portion L₂ of the container. As depicted in Figure 11, the sum of the length portions L₁ and L₂ is equal to the total length of the container 430 taken in the directions S and V, corresponding to the moving mesh web 420 and the moving support 410. Although Figure 11 schematically depicts the downward orientation of the mesh web 420 in length portion L₁ being approximately 50% of the total length of the container 430, it will be appreciated that the length portion L₁ can be nearly any portion of the total container length. For certain embodiments, the length of the tilted portion of the mesh web is less than the length of the container 430. For the embodiment depicted in Figure 11, the density of the deposited particulates at location 452 on the moving support 410 will be less than the density of the deposited particulates at location 454 on the support 410 as a result of the downward orientation of the moving mesh web 420. If vibration, active or passive, is present, such vibration may further promote an increase in density when comparing location 452 to 454. Further increases in density of the deposited particulates may occur with length portion L₂, such as in comparing the density at location 454 to the density at location 456.

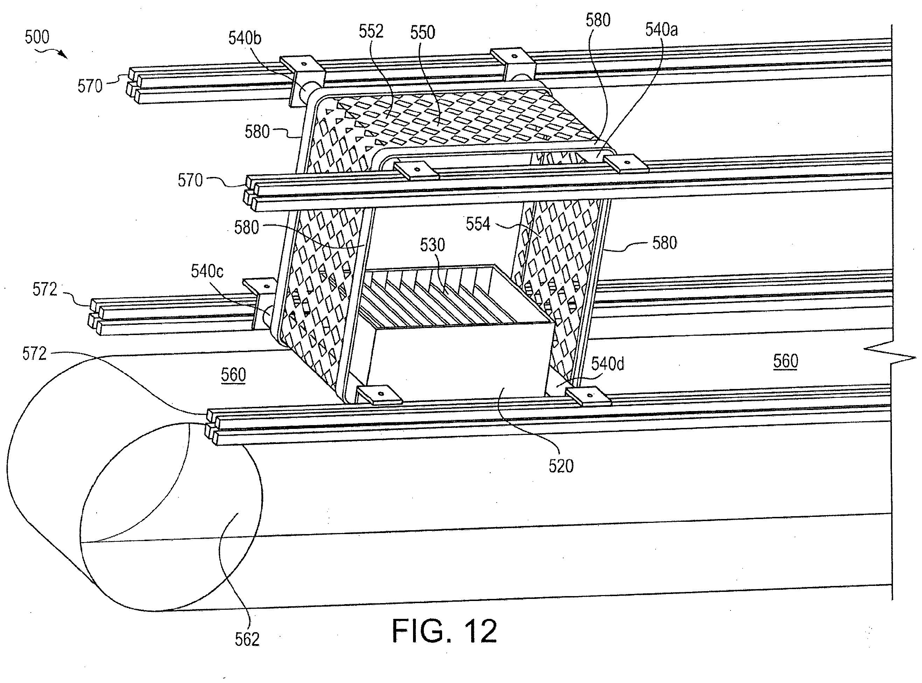

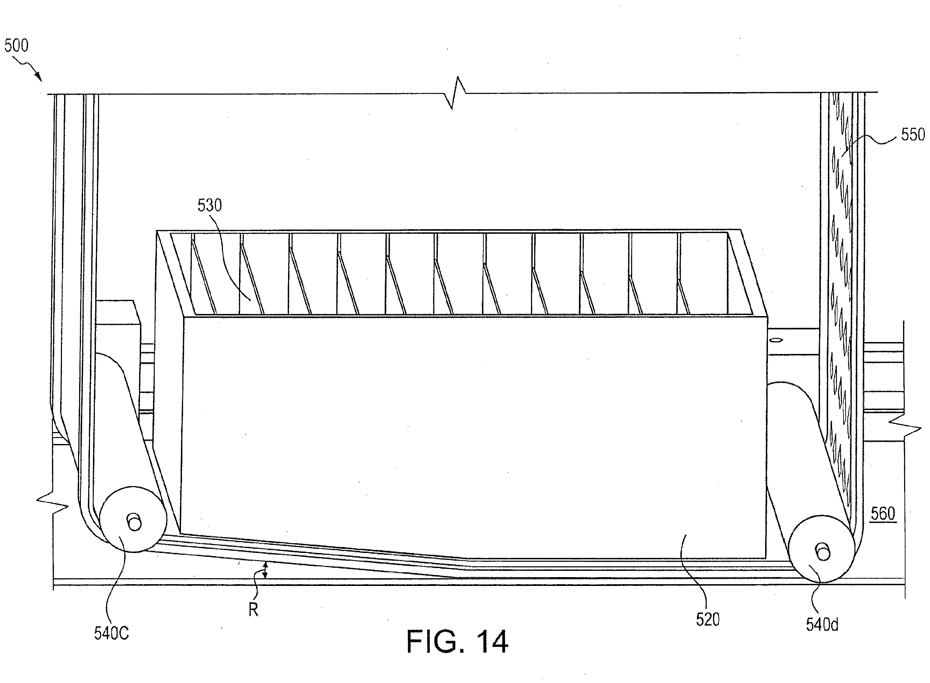

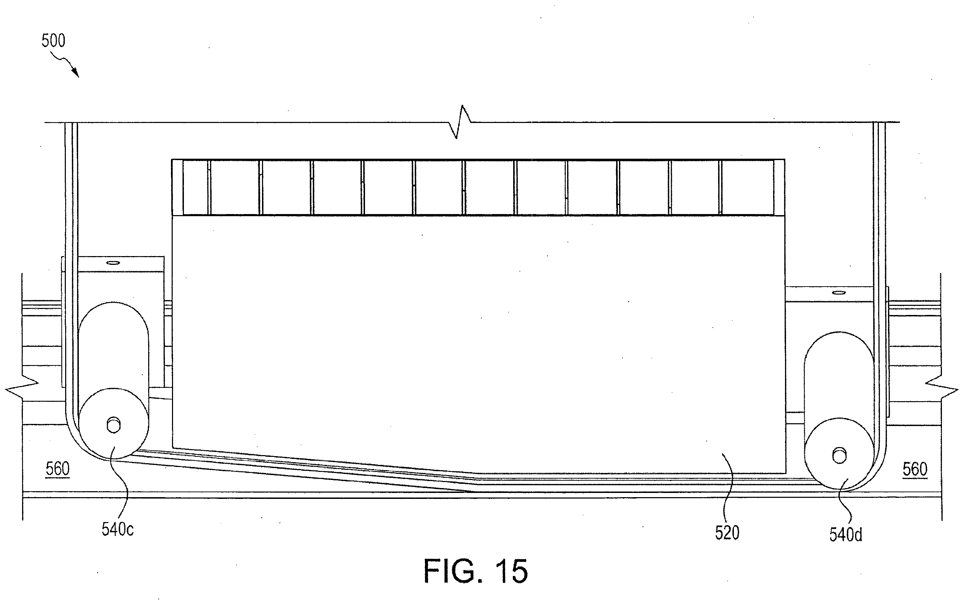

Figures 12-15 are various schematic views of another particle dispensing apparatus 500 in accordance with the present subject matter. The apparatus 500 comprises a container 520 for receiving and/or retaining particulate material to be dispensed. The container 520 may be provided in a variety of different forms, shapes, and sizes. An open top, rectangular or square shaped container is depicted in the referenced figures. In certain versions, the container 520 is devoid of a bottom wall or substrate. As described in greater detail herein, the container is positioned directly above a mesh web, and so the web serves as a bottom for the container. However, the present subject matter includes containers with bottom walls or substrates. Such bottom walls may be provided with apertures or patterned openings or arrangement of openings which are tailored to provide a pattern or amount of particulates being dispensed. The openings defined in the bottom wall if used, can be nearly any shape and/or size.

The apparatus 500 also comprises one or more reciprocating or vibrating members at least partially disposed within the container 520. In the embodiment depicted in the referenced figures, a collection of spaced apart and parallel blades 530 are illustrated. In certain embodiments, the reciprocating or vibrating members are in the form of blades 530. These blade members extend into the container 520. Upon depositing particulate material in the container 520 for subsequent deposition, the blades 530 contact the material. In certain embodiments of the dispensing apparatus, the blades can be configured to divide or segregate the container into distinct sections or compartments. One or more, or each section can then receive a different type of particulate material. The particulate materials may include particles having different sizes, different compositions, or different properties. It is also contemplated that certain sections may receive combinations of different particulate materials. Furthermore, each section or compartment may be further divided or segregated into smaller compartments or subcompartments. These strategies significantly increase the range of uses and flexibility in operation of the dispensing apparatus 500 and particularly for producing porous membranes or articles having properties and/or compositions that vary across the thickness of the membrane and/or in a crosswise direction, i.e., in a direction transverse to the direction of the moving mesh web described in greater detail herein.

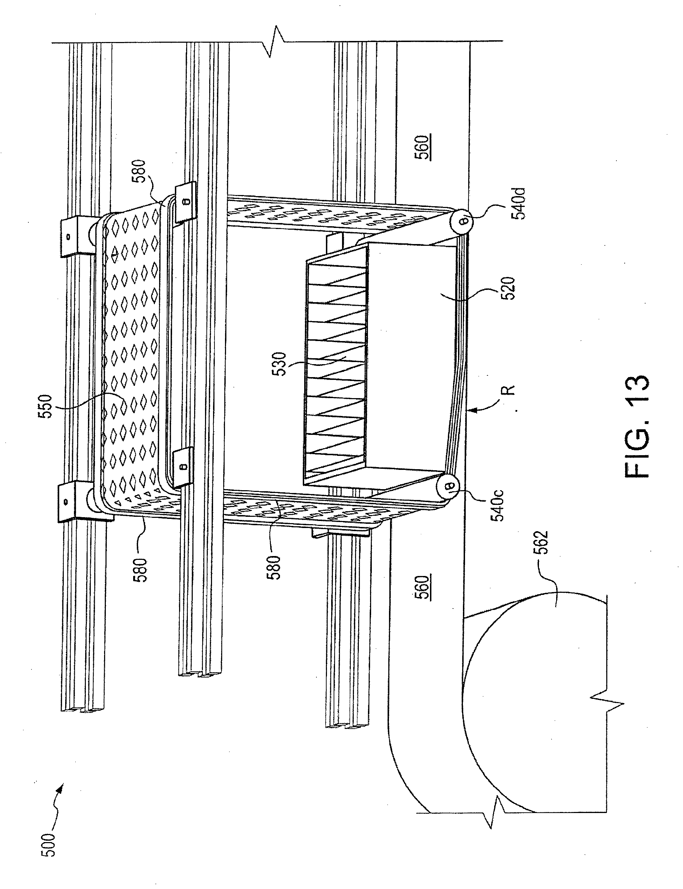

In certain versions, the apparatus 500 also comprises a plurality of rollers 540 which are designated in the referenced figures as including rollers 540a, 540b, 540c, and 540d. Each of the rollers is rotatably mounted and supported by a frame assembly. For example, upper frame members 570 support rollers 540a and 540b. And, lower frame members 572 support rollers 540c and 540d. Figures 13-15 illustrate the apparatus 500 with one of the lower frame members 572 removed to further reveal the apparatus.

The rollers, collectively referred to as rollers 540, support and guide a continuous mesh web 550. The mesh web 550 defines an outer face 552 and an oppositely directed inner face 554. As shown in the referenced figures, the mesh web 550 and associated rollers 540 are positioned so that the mesh web 550 passes under the container 520. Typically, the container 520 is positioned within an interior region defined by the rollers 540 and mesh web 550 passing therebetween, and between at least two of the rollers such as rollers 540c and 540d. However, the present subject matter includes a wide array of other configurations and arrangements.

The mesh web 550 can be provided in a wide range of configurations. Typically, the web 550 is passed closely underneath the container 520. The mesh web 550 is typically formed at least in part, from a thin flexible screen material which defines a relatively large number of apertures along its face. The apertures extend through the thickness of the mesh web 550. The size or span of the apertures in the mesh web are typically selected based upon the particle size or range of sizes of the particulate material to be dispensed. In the version illustrated, the web 550 includes a collection of uniformly arranged diamond shaped apertures 551 extending through the web 550. In certain applications, the apertures of the mesh web are sized such that a minimum proportion of particulates to be dispensed, can pass through the mesh web. For example, for certain applications, the mesh web is selected such that at least 90% of the particulates to be dispensed can pass through the mesh web. In other applications for example, the mesh web is selected such that at least 95% of the particulates to be dispensed can pass through the mesh web. In still other applications for example, the mesh web is selected such that at least 99% of the particulates to be dispensed can pass through the mesh web. In yet another example, if the particulate material to be dispensed has a particle size distribution of from 10 to 100 microns, it may be useful to use a mesh having openings that are 80 microns in order to deposit particles less than 80 microns and retain or not deposit particles having a size greater than 80 microns. In still another example, if the mesh web 550 includes regions of mesh that have different sized openings, such as in a web direction or in a cross direction, the maximum particle size of dispensed particulates can be controlled by directing only the desired regions of the mesh web 550 under the container 520. Although not wishing to be limited to any particular mesh sizes, a representative mesh opening of from about 200 microns to 250 microns is suitable for many applications. A wide array of mesh screen materials can be used for the mesh web 550. For example, wire screen materials can be used. In addition, fabric materials including woven and/or nonwoven materials can be used. It is also contemplated that perforated sheets or films could be used for the mesh web. A wide array of woven wire cloth products are commercially available from McMaster-Carr of Elmhurst, Illinois. Specific non-limiting examples of woven wire cloth include particle-sifting types 304, 316 and 430 stainless steel woven wire cloth, welded wire cloth, crimped space cloth, and molded plastic mesh including polyester, polypropylene, or other suitable polymeric materials. Custom made webs or meshes are commercially available from sources such as Interplex Industries, Inc. of College Point, New York.

In certain embodiments, the mesh web 550 includes one or more, and particularly two, raised regions 580 of a flexible material such as an elastomer or rubber material along one or both faces of the web 550. Typically, the raised regions are disposed on the outer face 552 of the mesh web 550. When using multiple raised regions of flexible material, the regions can be spaced apart and oriented parallel to one another. The height of the raised region 580 as measured from the outer face 552 of the mesh web 550 generally corresponds to the desired thickness of a layer of particulate material to be deposited on a substrate (or moving support), and is described in greater detail herein. Representative thickness ranges for the raised region(s) 580 include from about 0.01 inches (0,25mm)to about 0.50 inches (12,7mm), and more particularly from about 0.0625 inches (1,59mm) to about 0.125 inches (3,18mm). However, it will be appreciated that the present subject matter can utilize raised region(s) having heights lesser than or greater than these dimensions. In certain versions of the dispensing apparatus, the raised region(s) may not be necessary or desired. An appropriately tensioned mesh, with control provisions to adjust the distance between the container and the mesh web can be sufficient to control the thickness of the layer of deposited material.

The apparatus 500 is typically positioned above a region of a support substrate (or moving support) 560 upon which the particulate material is to be deposited. As explained in greater detail herein, the substrate (or moving support) 560 is typically moving or otherwise linearly displaced and passed under the apparatus 500. One or more primary rollers 562 can be used to feed, power, and/or collect the substrate (or moving support) 560 prior to and/or after receiving the particulate material.

In certain versions, the apparatus 500 also comprises vibratory provisions which upon operation, produce a reciprocating or vibratory movement which can be transferred to one or more components of the apparatus 500. This strategy produces active vibration as described in greater detail herein in conjunction with passive vibration. Typically, the vibratory provisions are in the form of commercially available shakers, industrial vibrators, and the like which are known in the material handling field. An example of a commercially available industrial vibrator are those offered by McMaster-Carr. Pneumatic operated piston vibrators may also be used. It is also contemplated that vibration of one or more components of the dispensing apparatus could be induced by acoustic means such as by using speakers which emit sound in the audible or ultrasound frequency range. The vibratory provisions are placed in vibratory communication with at least one blade member such that vibratory movement produced by the vibratory provisions is transmitted to the at least one blade member which results in the at least one blade member undergoing vibratory movement. In certain applications, the vibratory provisions are also placed in vibratory communication with the mesh web. This can be accomplished by placing the vibratory provisions in vibratory communication with one or more of the plurality of rollers 540.

The apparatus 500 depicted in Figures 12-15 utilizes a particular orientation for the moving web 550 in which the web 550, as it passes under the container 520 or at least under particulate material in the container to be deposited, extends downward at an angle across a first length portion of the container 520; and as the mesh web 550 passes under a remaining second length position of the container 520, the mesh web extends generally horizontal and parallel with the moving support 560 disposed under the moving web 550. The angle of downward orientation of the mesh web 550 is shown in Figures 13-14 as angle R, and may range from about 1° to about 30° or more, and particularly from about 2° to about 10°. Thus, that portion of the mesh web 550 is nonparallel to the moving support 560. It will be understood that the present subject matter is not limited to any of these angles and includes downward and upward orientations of angles less than or greater than these angles.

The present subject matter provides a method of forming layers of one or more types of particulates on a moving support. The method comprises providing a particulate dispensing apparatus as described herein. One or more types of particulates are deposited in the container(s) of the dispensing apparatus. The apparatus is then actuated or otherwise operated such that a mesh web associated with the dispensing apparatus is moved under the container(s). Optionally, vibratory movement may be transferred to the apparatus or components thereof. Upon actuation or operation of the apparatus, particulates are dispensed from the container, through the moving mesh web, and onto the moving support to thereby form the layer of particulates. The thickness of the resulting layer of particulates on the moving support can be controlled or adjusted by governing the distance between the mesh web and the moving support.

The present invention provides another method for forming a layer of particulates on a moving support. The method comprises providing a moveable mesh web and orienting the mesh web to extend above the moving support and at an angle of inclination relative to the moving support. The method also comprises linearly displacing the mesh web at a speed corresponding to the speed of the moving web. The method also comprises dispensing particulates on the mesh web and onto at least a portion of the mesh web that is oriented at the angle of inclination. Particulates pass through the moving mesh web and onto the moving support to thereby form the layer of particulates. The density of the layer of particulates can be increased by increasing the angle of downward inclination relative to the moving support. Conversely, the density of the layer or particulates can be reduced by decreasing the angle of downward inclination relative to the moving supports or orienting the web at an upward orientation relative to the moving support.

### Examples

A series of trials were conducted using a particulate dispensing apparatus as described herein. The apparatus utilized a collection of pneumatically operated piston vibrators to induce vibration to the apparatus, and particularly to the container and plurality of blades which are in contact with a particulate material in the container. The apparatus was operated as described herein and the density of the resulting layer of particulates was measured.

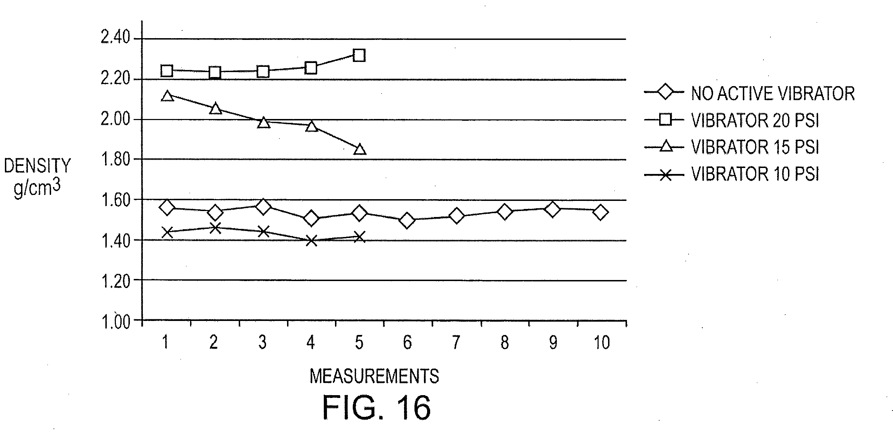

The results of this evaluation are graphically presented in Figure 16. In one trial, the apparatus was operated and ten (10) measurements of the density of the particulate layer were obtained. During this trial, no active vibration was applied or transferred to the apparatus. As shown, the measured density ranged from about 1.50 g/cm³ to about 1.58 g/cm³.

In another trial, a relatively low level of vibration was applied to the apparatus, and specifically to the pneumatic piston vibrators, using an air supply of 10 psi (68,95kPa). The resulting density of the particulate layer was slightly reduced, i.e. from about 1.40 g/cm³ to about 1.48 g/cm³.

In another trial, a moderate level of vibration using an air supply of 15 psi (103,42kPa) was applied. The resulting density measurements were within a range of from about 1.82 g/cm³ to about 2.12 g/cm³.

These measurements indicate that selection and control of density in a deposited layer of particulates can be accomplished by adjusting the extent of vibration to the dispensing apparatus. Generally, increasing the extent of vibration resulted in higher density levels. However, at relatively low vibration levels, density was reduced relative to a nonvibrating dispensing operation.

In yet another trial, a higher level of vibration was applied using an air supply of 20 psi (137,90kPa). The density of the resulting particulate layer was significantly higher, e.g. from about 2.22 g/cm³ to about 2.35 g/cm³.

Additional aspect, methods, and systems relating to the present subject matter are disclosed in U.S. Provisional Application No. 61/691,506 filed August 21, 2012, entitled "SYSTEMS AND METHODS FOR MAKING POROUS FILMS, FIBERS, SPHERES, AND OTHER ARTICLES".

Many other benefits will no doubt become apparent from future application and development of this technology.

As described hereinabove, the present subject matter overcomes many problems associated with previous strategies, systems and/or devices. However, it will be appreciated that various changes in the details, materials and arrangements of components, which have been herein described and illustrated in order to explain the nature of the present subject matter, may be made by those skilled in the art without departing from the principle and scope of the claimed subject matter, as expressed in the appended claims.

## Claims

1. A method for forming a layer of particulates on a moving support (410, 560), the method comprising:
providing a moveable mesh web (420, 550), the mesh web defining a plurality of apertures;
orienting the mesh web (420, 550) to extend above the moving support (410, 560) and at an angle of inclination (R) relative to the moving support (410, 560), wherein the angle of inclination (R) is greater than or equal to 1 °;
linearly displacing the mesh web (420, 550) at a speed corresponding to the speed of the moving support (410, 560);
dispensing particulates on the mesh web (420, 550) and onto at least a portion of the mesh web (420, 550) that is oriented at the angle of inclination (R), whereby particulates pass through the moving mesh web (420, 550), and onto the moving support to thereby form the layer of particulates.

2. The method of claim 1 wherein increasing the angle of inclination (R) relative to the moving support (410, 560) increases the density of the layer of particulates formed on the moving support (410, 560).

3. The method of claim 1 wherein decreasing the angle of inclination (R) relative to the moving support (410, 560) reduces the density of the layer of particulates formed on the moving support (410, 560).

## Patentansprüche

1. Verfahren zur Erzeugung einer Schicht aus Partikeln auf einer sich bewegenden Unterlage (410, 560), wobei das Verfahren umfasst:
Bereitstellen eines beweglichen Maschennetzes (420, 550), wobei das Maschennetz eine Vielzahl von Öffnungen definiert;
Orientieren des Maschennetzes (420, 550), so dass es sich über der sich bewegenden Unterlage (410, 560) und in einem Neigungswinkel (R) relativ zu der sich bewegenden Unterlage (410, 560) erstreckt, wobei der Neigungswinkel (R) größer oder gleich 1° ist;
lineares Verschieben des Maschennetzes (420, 550) mit einer Geschwindigkeit, die der Geschwindigkeit der sich bewegenden Unterlage (410, 560) entspricht;
Abgeben von Partikeln auf das Maschennetz (420, 550) und auf wenigstens einen Abschnitt des Maschennetzes (420, 550), der in dem Neigungswinkel (R) orientiert ist, wodurch Partikel durch das sich bewegende Maschennetz (420, 550) und auf die sich bewegende Unterlage gehen, um dadurch die Schicht aus Partikeln zu erzeugen.

2. Verfahren nach Anspruch 1, wobei das Vergrößern des Neigungswinkels (R) relativ zu der sich bewegenden Unterlage (410, 560) die Dichte der Schicht aus Partikeln, die auf der sich bewegenden Unterlage (410, 560) erzeugt wird, vergrößert.

3. Verfahren nach Anspruch 1, wobei das Verringern des Neigungswinkels (R) relativ zu der sich bewegenden Unterlage (410, 560) die Dichte der Schicht aus Partikeln, die auf der sich bewegenden Unterlage (410, 560) erzeugt wird, verringert.

## Revendications

1. Procédé de formation d'une couche de particules sur un support en mouvement (410, 560), le procédé comprenant :
fournir une toile de maille mobile (420, 550), la toile de maille définissant une pluralité d'ouvertures ;
orienter la toile de maille (420, 550) pour s'étendre au-dessus du support en mouvement (410, 560) et à un angle d'inclinaison (R) par rapport au support en mouvement (410, 560), dans lequel l'angle d'inclinaison (R) est supérieur ou égal à 1° ;
déplacer linéairement la toile de maille (420, 550) à une vitesse correspondant à la vitesse du support en mouvement (410, 560) ;
distribuer des particules sur la toile de maille (420, 550) et sur au moins une portion de la toile de maille (420, 550) qui est orientée à l'angle d'inclinaison (R), moyennant quoi des particules passent à travers la toile de maille en mouvement (420, 550), et sur le support en mouvement pour former de ce fait la couche de particules.

2. Procédé selon la revendication 1, dans lequel augmenter l'angle d'inclinaison (R) par rapport au support en mouvement (410, 560) augmente la densité de la couche de particules formée sur le support en mouvement (410, 560).

3. Procédé selon la revendication 1, dans lequel diminuer l'angle d'inclinaison (R) par rapport au support en mouvement (410, 560) réduit la densité de la couche de particules formée sur le support en mouvement (410, 560).
